# EUROPEAN PATENT APPLICATION

(11) **EP 4 521 733 A1**
(43) Date of publication of application: **12.03.2025**
(21) Application number: 23908796.8
(22) Date of filing: 10.02.2023
(51) Int. Cl.: H04N 7/14

(54) **VIDEO DATA TRANSMISSION METHOD AND SYSTEM, AND ELECTRONIC DEVICE AND STORAGE MEDIUM**

(30) Priority: 30.12.2022 CN 202211734328
(71) Applicant: ZTE CORPORATION, Shenzhen, Guangdong 518057 (CN)
(72) Inventor: YANG, Haicheng, Shenzhen, Guangdong 518057 (CN); ZHOU, Jinxing, Shenzhen, Guangdong 518057 (CN)
(74) Representative: Deambrogi, Edgardo
(86) International application number: PCT/CN2023/075494
(87) International publication number: WO 2024/138838

(57) **Abstract**

Provided are a video data transmission method and a system, and an electronic device and a storage medium. The video data transmission method is applied to a first terminal, and includes: performing a video call with a second terminal through a first data channel; receiving labeled data which is sent by the second terminal through a second data channel, wherein the labeled data is used for indicating a target label added to a target object in a video frame shared by the first terminal; determining, based on the labeled data, the target object labeled by the second terminal; determining the target object in video data which is to be transmitted through the first data channel, and adding the target label to a position, corresponding to the target object, in the video data; and transmitting, to the second terminal through the first data channel or the second data channel, the video data added with the target label.

## Description

### Cross-Reference to Related Application

This disclosure claims the priority of Chinese patent application No. CN202211734328.7, filed December 30, 2022 and entitled "VIDEO DATA TRANSMISSION METHOD AND SYSTEM, AND ELECTRONIC DEVICE AND STORAGE MEDIUM", the content of which is incorporated herein by reference in its entirety.

### Technical Field

The present disclosure belongs to the field of mobile communications, and in particular, to a video data transmission method and system, and an electronic device and a storage medium.

### Background

A 5G new phone product has special functions of Voice over New Radio (VoNR), a 5G video customer service, Artificial Intelligence (Al) speech recognition (real-time translation between Chinese and English, and technology for the elderly), screen sharing, remote cooperation, and virtual digital human calling. It can provide users with a visual, multimedia, and high-perception super-definition calling experience, break communication boundaries, and improve the communication efficiency.

The remote cooperation can be widely applied in scenarios such as parent-child education and tutoring, operation guideline, synchronous cloud shopping, and remote assistance to users in solving after-sales problems of products. During remote cooperation, a user can share a local camera or a screen of a mobile phone, and the counterpart end can label a video interface shared by a user (For example, add an Augmented Reality (AR) label) to achieve communications. However, after the labeling is completed, when the user moves the mobile phone or a screen interface changes, a labeled target object will change, which may cause the label to be misplaced or lost.

### Summary

Embodiments of the present disclosure provide a video data transmission method and system, and an electronic device and a storage medium, which can solve the problem of inability of position tracking caused by dislocation or loss of a label in a video call process.

In a first aspect, the embodiments of the present disclosure provide a video data transmission method, applied to a first terminal, and including: performing a video call with a second terminal through a first data channel; receiving labeled data which is sent by the second terminal through a second data channel, wherein the labeled data is used for indicating a target label added to a target object in a video frame shared by the first terminal; determining, based on the labeled data, the target object labeled by the second terminal; determining the target object in video data which is to be transmitted through the first data channel, and adding the target label to a position, corresponding to the target object, in the video data; and transmitting, to the second terminal through the first data channel or the second data channel, the video data added with the target label.

In a second aspect, the embodiments of the present disclosure provide another video data transmission method, applied to a second terminal, and including: performing a video call with a first terminal through a first data channel; in response to an external input, adding a target label for a target object to a video frame which is shared by the first terminal, wherein the labeled data is used for indicating a target label added to a target object in a video frame shared by the first terminal; in a subsequent process of the video call with the first terminal, obtaining target video data, which is added with the target label, of the first terminal, wherein the target label is added to a position, corresponding to the target object, in the target video data; and displaying the target video data.

In a third aspect, the embodiments of the present disclosure provide a video data transmission method, applied to a data server, and including: receiving labeled data which is sent by a second terminal through a second data channel in a process of a video call with a first terminal through a first data channel, wherein the labeled data is used for indicating a target label added to a target object in a video frame shared by the first terminal; receiving first video data which is transmitted by the first terminal through the first data channel to the second terminal; determining the target object in the first video data, and obtaining second video data by adding the target label to a position, corresponding to the target object, in the first video data; and transmitting the second video data to the second terminal through the second data channel.

In a fourth aspect, the embodiments of the present disclosure provide a video data transmission system. The system includes: a first terminal, configured to perform the method as described in the first aspect; and a second terminal, configured to perform the method as described in the second aspect.

In a fifth aspect, the embodiments of the present disclosure provides an electronic device, including a processor, a memory, and programs or instructions stored on the memory and runnable on the processor. The programs or instructions, when run by the processor, implement the steps of the methods as described in the first aspect, the second aspect, and the third aspect.

In a sixth aspect, the embodiments of the present disclosure provide a readable storage medium, having programs or instructions stored thereon. The programs or instructions, when run by a processor, implement the steps of the methods as described in the first aspect, the second aspect, and the third aspect.

### Brief Description of the Drawings

FIG. 1a is a flowchart of a video data transmission method according to an embodiment of the present disclosure;
FIG. 1b is a schematic diagram of adding a target label according to an embodiment of the present disclosure;
FIG. 2 is a flowchart of another video data transmission method according to an embodiment of the present disclosure;
FIG. 3 is a flowchart of still another video data transmission method according to an embodiment of the present disclosure;
FIG. 4 is a schematic structural diagram of a video data transmission system according to an embodiment of the present disclosure;
FIG. 5 is a schematic structural diagram of an electronic device according to an embodiment of the present disclosure;
FIG. 6 is a schematic structural diagram of another terminal according to an embodiment of the present disclosure;
FIG. 7 is a schematic diagram of establishing a data channel according to an embodiment of the present disclosure;
FIG. 8 is a flowchart of a video data transmission method according to an embodiment of the present disclosure;
FIG. 9 is a flowchart of another video data transmission method according to an embodiment of the present disclosure;
FIG. 10 is a flowchart of still another video data transmission method according to an embodiment of the present disclosure; and
FIG. 11 is a flowchart of yet another video data transmission method according to an embodiment of the present disclosure.

### Detailed Description of the Embodiments

The technical solutions in the embodiments of present disclosure are clearly and completely described below with reference to the accompanying drawings in the embodiments of present disclosure. Apparently, the described embodiments are some rather than all the embodiments of present disclosure. All other embodiments obtained by a person of ordinary skill in the art based on the embodiments of the present disclosure without making creative efforts shall fall within the protection scope of the present disclosure.

The terms "first", "second", etc. in this specification and claims of the present disclosure are defined to distinguish similar objects, and do not have to be used to describe a specific order or sequence. It should be understood that data used like this is interchangeable where appropriate, so that the embodiments of the present disclosure can be implemented in an order other than those illustrated or described here. Furthermore, objects distinguished by "first", "second", and the like are usually of the same class and do not limit the number of objects. For example, the first object can be one or multiple. In addition, "and/or" used in this specification and the claims represents at least one of the connected objects. Symbol "/" usually represents an "or" relationship between front and back associated objects.

A video data transmission method and system, and an electronic device, and a storage medium according to the embodiments of the present disclosure will be described in detail below through specific embodiments and their application scenarios in combination with the accompanying drawings.

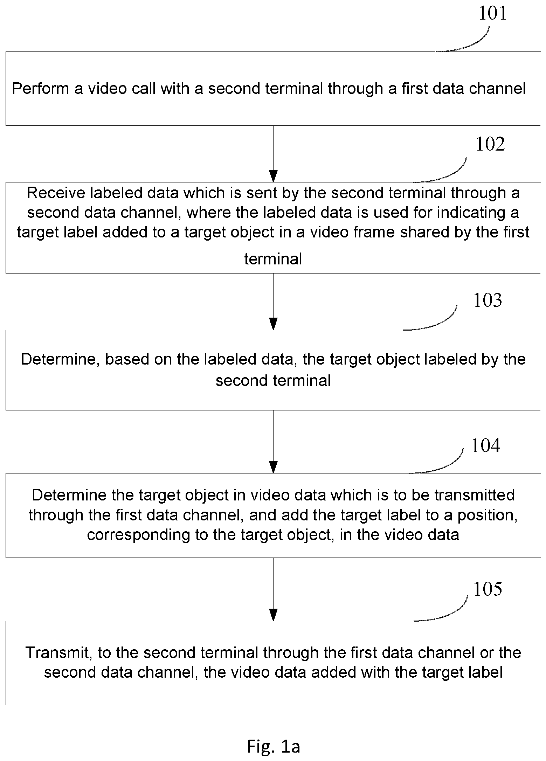

FIG. 1a is a flowchart of a video data transmission method according to an embodiment of the present disclosure. The method can be performed by a first terminal, such as a vehicle-mounted terminal or a mobile phone terminal. Referring to FIG. 1a, the method may include the following steps.

At step 101: A video call with a second terminal is performed through a first data channel.

In this embodiment of the present disclosure, the first terminal can establish the first data channel for the video call with the second terminal by calling the second terminal, or the first terminal can establish the first data channel for the video call with the second terminal in response to a call from the second terminal. This is not specifically limited in this embodiment of the present disclosure.

Optionally, the video call includes, but is not limited to, an IMS type call such as VoNR, Voice over LTE (VoLTE), and Voice over WiFi (VoWiFi).

In this embodiment of the present disclosure, the first data channel is used for transmitting audio and video data for the video call between the first terminal and the second terminal. Therefore, the first data channel may be referred to as an audio and video channel.

At step 102: Labeled data which is sent by the second terminal through a second data channel is received. The labeled data is used for indicating a target label added to a target object in a video frame shared by the first terminal.

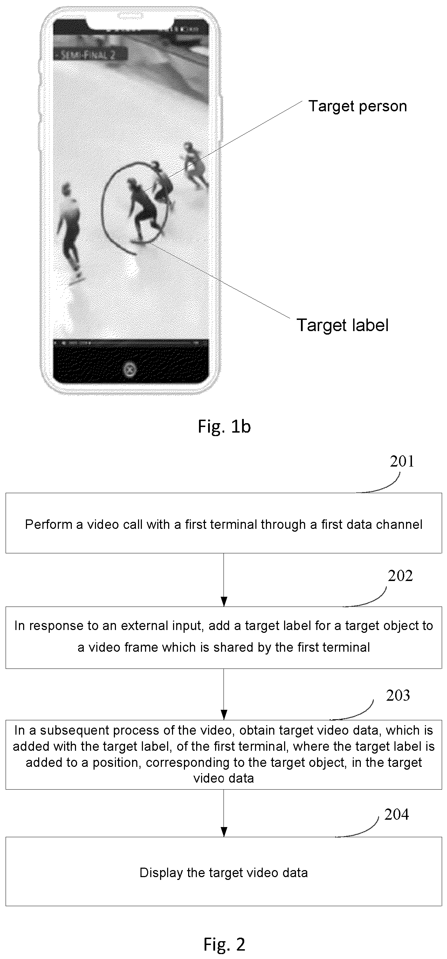

In this embodiment of the present disclosure, a user of the second terminal can add a label to the target object in the video frame shared by the first terminal and displayed on the second terminal. For example, in a video frame shown in FIG. 1b, the user of the second terminal enters a label of a target person (i.e. the target object) in the video frame.

In this embodiment of the present disclosure, the video frame may be an augmented reality (AR) frame. Therefore, the label of the target object may also be referred to as an AR label.

In this embodiment of the present disclosure, since the first data channel is used for transmitting video call data between the first terminal and the second terminal, the second terminal sends the labeled data through the second data channel. For example, the second terminal can send the labeled data to the second terminal through an IP Multimedia Subsystem (IMS) data channel.

In an implementation, the above labeled data can be full image data added with the target label. Namely, the second terminal sends the labeled full image data to the first terminal, such as image data shown in FIG. 1b. By use of this possible implementation, the first terminal can obtain comprehensive image data, making it easier for the first terminal to identify the labeled target object.

In another implementation, the above labeled data can include the target label and region information identified by the target label. Namely, the second terminal can send the label and the region information identified by the target label to the first terminal. For example, in FIG. 1b, the second terminal can send the added target label and the target person identified by the label to the first terminal. By use of this possible implementation, the amount of the labeled data sent by the second terminal to the first terminal can be reduced, to save transmission resources.

At step 103: The target object labeled by the second terminal is determined based on the labeled data.

According to the labeled data sent by the second terminal, the first terminal can obtain the target object labeled by the second terminal. For example, in the image data shown in FIG. 1b, the first terminal can determine, according to a labeled position, that the target object labeled by the second terminal is the target person.

At step 104: The target object in video data which is to be transmitted through the first data channel is determined, and the target label is added to a position, corresponding to the target object, in the video data.

In this embodiment of the present disclosure, through step 103, the first terminal can obtain the target object labeled by the second terminal. In step 104, the first terminal can identify the target object in the video data which is to be transmitted through the first data channel, and then add the target label to the position, corresponding to the target object, in the video data.

For example, the first terminal can detect whether the acquired video data contains a region labeled by the target label. For example, inertial sensor data can be read to obtain a current motion state and motion speed of the first terminal, and image-based plane detection is performed in the acquired video data according to the obtained target label and relevant information, thereby determining whether the acquired video data contains a labeled region. In a case that the acquired video data contains the labeled region, the target label is added to the labeled region.

For example, in the image data shown in FIG. 1b, the position of the target person may move in the video data to be transmitted. The first terminal can find out the target person from the video data and then add the target label to the position corresponding to the target person. For example, the label of the target person is circled.

At step 105: The video data added with the target label is transmitted to the second terminal through the first data channel or the second data channel.

In an optional implementation of the present disclosure, the first terminal may send, to the second terminal, the video data added with the target label through the first data channel. Namely, the first terminal may send, to the second terminal, the video data added with the target label through the audio and video channel. The first terminal sends the video data added with the target label through the audio and video channel to the second terminal, which can reduce the amount of transmitted video data and save transmission resources.

In another optional implementation of this embodiment of the present disclosure, the first terminal may send, to the second terminal through the second data channel, the video data added with the target label. By use of this implementation, it is possible to avoid the impact of the video data added with the target label on video data of the video call.

In an implementation, after adding the target label to the position, corresponding to the target object, in the video data, the first terminal can further locally display the video data added with the target label, so that a user of the first terminal can determine whether the added target label is correct and can know the target object labeled by the user of the second terminal.

In this embodiment of the present disclosure, in the process of the video call between the first terminal and the second terminal through the first data channel, the first terminal receives the labeled data of the target object labeled by the second terminal in the video frame shared by the first terminal, determines, according to the labeled data, the target object labeled by the second terminal, then adds the label to the position, corresponding to the target object, in the video data which is to be transmitted on the first terminal, and transmits the labeled video data to the second terminal, thereby achieving tracking of the labeled position in the process of the video call and improving the communication efficiency of the video call.

In an implementation, before the first terminal receives the labeled data of the second terminal, the second data channel may not be established between the first terminal and the second terminal. Therefore, in this implementation, before step 102 mentioned above, the method may further include the following steps:
At step 1011: A session establishment signaling which is sent by the second terminal is received.

For example, if the established second data channel is an IMS data channel, the session establishment signaling may be a Session Initiation Protocol (SIP) signaling, and a dcmap field in a Session Description Protocol (SDP) offer message in the SIP signaling is used for carrying indication information indicating that a data channel needs to be established.

At step 1012: The session establishment signaling is analyzed, and indication information which is carried in the session establishment signaling and indicates that a data channel needs to be established is obtained.

The first terminal may indicate, in the session establishment signaling, that a data channel needs to be established, and the second terminal may know, according to the indication of the first terminal, that the second data channel needs to be established.

At step 1013: The second data channel to the second terminal is established.

In this embodiment of the present disclosure, the first terminal can send a response message to the second terminal, thereby establishing the second data channel to the second terminal.

In this embodiment of the present disclosure, in the process of the video call with the second terminal, the first terminal receives the session establishment signaling sent by the second terminal, obtains, by analyzing the session establishment signaling, the indication information indicating that a data channel needs to be established, and establishes the second data channel between the first terminal and the second terminal. After establishing the second data channel between the first terminal and the second terminal, the first terminal can transmit data to the second terminal through the second data channel, so as to receive the labeled data sent by the second terminal in the process of the video call.

In an alternative implementation, the first terminal may not support adding the target label in the video data. Step 102 is only executed if the first terminal supports adding the target label in the video data. Therefore, in this alternative implementation, before step 103, the method may further include: It determines that the first terminal supports adding the target label in the video data.

In an optional implementation, the first terminal may not support adding the target label in the video data. Therefore, after step 102 mentioned above, the method may further include: In a case of determining that the first terminal supports adding the target label in the video data, the video data is transmitted to the second terminal through the first data channel. In this optional implementation, in a case that the first terminal does not support adding the target label in the video data, after receiving the labeled data, the first terminal does not add the target label in the video data to be transmitted, but instead, sends, through the first data channel according to the current video call flow, original video data which is not added with the target label to the second terminal.

FIG. 2 is a flowchart of another video data transmission method according to an embodiment of the present disclosure. The method may be performed by a second terminal. Referring to FIG. 2, the method may include the following steps:
At step 201: A video call with a first terminal is performed through a first data channel.

In this embodiment of the present disclosure, the second terminal can establish the first data channel for the video call with the first terminal by calling the first terminal, or the second terminal can establish the first data channel for the video call with the first terminal in response to a call from the first terminal. This is not specifically limited in this embodiment of the present disclosure.

At step 202: In response to an external input, a target label for a target object is added to a video frame which is shared by the first terminal.

At step 203: In a subsequent process of the video call, target video data, which is added with the target label, of the first terminal is obtained. The target label is added to a position, corresponding to the target object, in the target video data.

At step 204: The target video data is displayed.

After obtaining the target video data, the second terminal locally displays the target video data.

In this embodiment of the present disclosure, in the process of the video call with the first terminal through the first data channel, the second terminal adds, in response to the external input, the label to the target object in the video frame which is shared by the first terminal, and sends the target object to the first terminal. In the subsequent process of the video call, the target video data sent by the first terminal and is added with the label for the target object is obtained, and the labeled target video data is displayed. The position of an AR label in the process of the video call is tracked.

In a first implementation, as shown in FIG. 1 above, the first terminal sends video data to be transmitted to the second terminal after adding the target label to the video data to be transmitted. Therefore, in this implementation, step 203 mentioned above may include:
At step 2021: Labeled data is sent to the first terminal through a second data channel to the first terminal. The labeled data is used for indicating the target label added to the target object in the video frame shared by the first terminal.

The labeled data is the same as the labeled data in the method shown in FIG. 1, which can be specifically found in the relevant description above and will not be elaborated here.

Optionally, the second data channel can be an IMS data channel.

At step 2022: The target video data is received. The target video data is transmitted by the first terminal through the first data channel or the second data channel and is added with the target label.

In this embodiment of the present disclosure, the first terminal can transmit, through the first data channel, the target video data added with the target label, or transmit the target video data through the second data channel.

In this embodiment of the present disclosure, the second terminal sends, to the first terminal through the second data channel between the first terminal and the second terminal, the target labeled data added to the target object in the video frame which is shared by the first terminal. After the first terminal receives and processes the labeled data, the second terminal receives the labeled target video data transmitted by the first terminal, so that the video data displayed by the second terminal displays the target label at a position corresponding to the target object.

In an implementation, before transmitting the labeled data the second data channel may not be established between the second terminal and the first terminal. Therefore, in this implementation, before step 2021 mentioned above, the method may further include the following steps:
At step 2023: A session establishment signaling is sent to the first terminal. The session establishment signaling carries indication information that indicates that a data channel needs to be established.

For example, for the IMS data channel, the session establishment signaling can be an SIP signaling.

At step 2024: A response signaling which is sent by the first terminal is received, and the second data channel to the first terminal is established.

For example, after receiving the session establishment signaling, the first terminal returns a response signaling to the second terminal in response to the session establishment signaling, thereby establishing the second data channel to the first terminal.

In this embodiment of the present disclosure, the second terminal establishes the second data channel to the first terminal by sending, to the first terminal, the session establishment signaling that carries the indication information indicating that a data channel needs to be established and upon receiving the response signaling sent by the first terminal, thereby completing the establishment of the second data channel between the first terminal and the second terminal, so that the above-mentioned labeled data can be transmitted through the second data channel.

In a second implementation, the second terminal may add the target label in the video data after receiving the video data transmitted by the first terminal, and then display the video data added with the target label. Therefore, in this implementation, step 203 mentioned above may include the following steps:
At step 2025: First video data which is transmitted by the first terminal through the first data channel is received.

At step 2026: The target video data is obtained by adding the target label to a position, corresponding to the target object, in the first video data.

In this embodiment of the present disclosure, the second terminal can use the same method applied to the first terminal to add the target label to the first video data transmitted by the first terminal. For details, refer to the relevant description in the method shown in FIG. 1 above, which will not be elaborated here.

For example, the second terminal may first determine the target object in the first video data, and then add the target label to the position, corresponding to the target object, in the first video data.

The second terminal receives the first video data which is transmitted by the first terminal and is not added with the target label, and adds a label to the position, corresponding to the target object, in the first video data. The first video data added with the label is the target video data. Through this implementation, the second terminal adds the target label in the video data, which can lower the requirement for the capability of the first terminal.

In the above implementation, optionally, the second terminal may first send the labeled data to the first terminal, and then add the target label to the received video data in a case that the received video data is not added with the target label. Therefore, in an optional implementation, after a target label for a target object is added to a video frame which is shared by the first terminal, the method may further include: Labeled data is sent to the first terminal through a second data channel to the first terminal. The labeled data is used for indicating the target label added to the target object in the video frame shared by the first terminal. The second data channel is the same as the second data channel mentioned above. For details, refer to the relevant description above, which will not be elaborated here.

In the above implementation, before the target video data is obtained by adding the target label to the position, corresponding to the target object, in the first video data, the second terminal may first determine whether the first video data contains the target label. In a case that it is determined that the first video data does not contain the target label, the target video data can be obtained by adding the target label to the position, corresponding to the target object, in the first video data.

In a third implementation, the second terminal may obtain, through a data server, the target video data added with the target label. Therefore, in this implementation, step 203 may include the following steps:
At step 2027: The labeled data is sent to a data server through a second data channel to the data server. The labeled data is used for indicating the target label added to the target object in the video frame shared by the first terminal; and
Optionally, the labeled data is the same as the labeled data mentioned above. For details, refer to the relevant description above, which will not be elaborated here.

In this embodiment of the present disclosure, the data server can use the same method applied to the first terminal to add the target label to the video data transmitted by the first terminal. For details, refer to the relevant description in the method shown in FIG. 1 above, which will not be elaborated here.

At step 2028: The target video data is received. The target video data is transmitted by the data server through the second data channel and is added with the target label.

In this embodiment of the present disclosure, through the second data channel to the data server, the second terminal sends, to the data server, the target labeled data which instructs the second terminal to add the target label to the target object in the video frame shared by the first terminal. This allows the data server to transmit the labeled target video data to the second terminal, thereby enabling the target label in a video to move along with the movement of the target object.

In the above implementation, before the second terminal transmits the labeled data to the data server, the second data channel may not be established between the second terminal and the data server. The second terminal may first establish the second data channel to the data server. Therefore, optionally, before step 2027 mentioned above, the method may further include the following steps:
At step 2028: A session establishment signaling is sent to the data server. The session establishment signaling carries indication information that indicates that a data channel needs to be established.

For example, the second terminal may send an SIP UPDATE signaling carrying a dcmap field to the data server, and then establish the IMS data channel to the data server.

At step 2029: A response signaling which is sent by the data server is received, and the second data channel to the data server is established.

In this embodiment of the present disclosure, the second terminal establishes the second data channel between the second terminal and the data server by sending, to the data server, the session establishment signaling that carries the indication information indicating that a data channel needs to be established and upon receiving the response signaling sent by the data server, thereby enabling the second terminal to send the above labeled data to the data server through the second data channel.

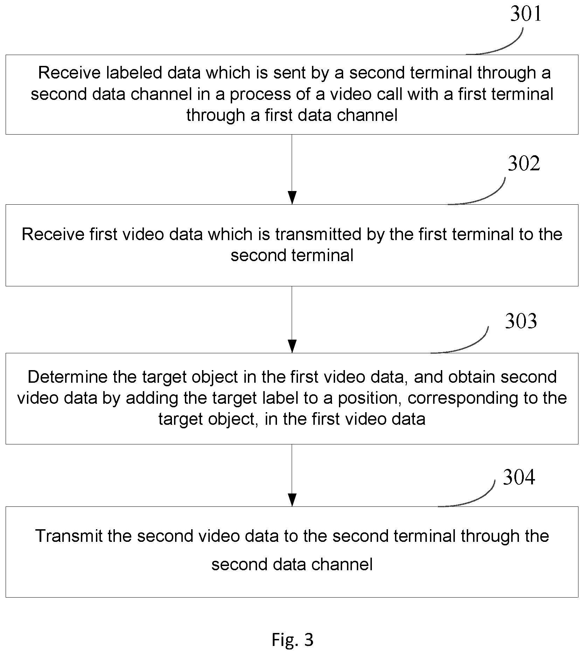

FIG. 3 is a flowchart of another video data transmission method according to an embodiment of the present disclosure. The method is applied to a data server. Referring to FIG. 3, the method may include the following steps:
At step 301: Labeled data is received. The labeled data is sent by a second terminal through a second data channel in a process of a video call with a first terminal through a first data channel. The labeled data is used for indicating a target label added to a target object in a video frame shared by the first terminal.

The second data channel can be an IMS data channel.

At step 302: First video data which is transmitted by the first terminal to the second terminal is received.

At step 303: The target object in the first video data is determined, and second video data is obtained by adding the target label to a position, corresponding to the target object, in the first video data.

In this embodiment of the present disclosure, the data server may use the method used by the first terminal for adding the target label to the video data to be transmitted to add the target label to the first video data. For details, refer to the relevant description mentioned above.

At step 304: The second video data is transmitted to the second terminal through the second data channel.

In this embodiment of the present disclosure, through the second data channel to the second terminal, the data server receives the labeled data added by the second terminal to the target object in the video frame shared by the first terminal, and then adds the target label to the position, corresponding to the target object, in the received first video data that is not labeled, thus obtaining the second video data and transmitting the second video data to the second terminal. The position of the target label for the target object can be tracked in the process of the video call.

In an implementation, before step 301 mentioned above, the second data channel may not be established between the data server and the second terminal, and the second terminal may request to establish the second data channel to the data server. Therefore, in this implementation, before step 301, the method may further include the following steps:
At step 3011: A session establishment signaling which is sent by the second terminal is received.

At step 3012: The session establishment signaling is analyzed, and indication information which is carried in the session establishment signaling and indicates that a data channel needs to be established is obtained.

At step 3013: The second data channel to the second terminal is established.

For example, the data server can send a response signaling carrying the indication information to establish the second data channel to the second terminal.

In this embodiment of the present disclosure, by analyzing the received session establishment signaling sent by the second terminal, the data server obtains the indication information indicating that a data channel needs to be established, and then establishes the second data channel between the data server and the second terminal, so as to receive, through the second data channel, the labeled data sent by the second terminal.

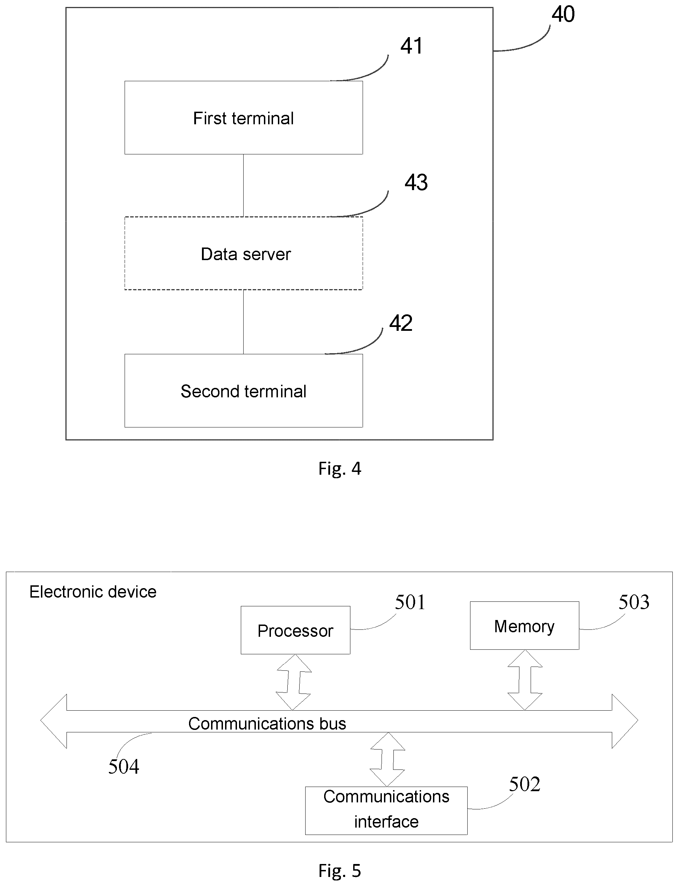

FIG. 4 is a schematic structural diagram of a video data transmission system according to an embodiment of the present disclosure. Referring to FIG. 4, the system 40 includes a first terminal 41 and a second terminal 42. The first terminal 41 is configured to perform the video data transmission method described in the embodiment shown in FIG. 1. The second terminal 42 is configured to perform the video data transmission method described in the embodiment shown in FIG. 2. For example, the first terminal 41 performs the video data transmission method described in the embodiment shown in FIG. 1, and the second terminal 42 may perform the first or second implementation of the video data transmission method described in the embodiment shown in FIG. 2 above.

In an implementation, as shown in FIG. 4, the system may further include a data server 43, configured to perform the video data transmission method described in the embodiment shown in FIG. 3. In this implementation, the second terminal 42 may perform the third implementation of the video data transmission method described in the embodiment shown in FIG. 2 above.

Based on the same technical concept, the embodiments of the present disclosure further provide an electronic device. The electronic device is configured to perform the video data transmission methods described above. FIG. 5 is a schematic structural diagram of an electronic device according to an embodiment of the present disclosure. The electronic device may vary greatly due to differences in configuration or performance, including a processor 501, a communications interface 502, a memory 503, and a communications bus 504. The processor 501, the communications interface 502, and the memory 503 communicate with each other through the communications bus 504. The processor 501 may call a computer program stored on the memory 503 and runnable on the processor 501 to execute the following steps:
performing a video call with a second terminal through a first data channel; receiving labeled data which is sent by the second terminal through a second data channel, wherein the labeled data is used for indicating a target label added to a target object in a video frame shared by the first terminal; determining, based on the labeled data, the target object labeled by the second terminal; determining the target object in video data which is to be transmitted through the first data channel, and adding the target label to a position, corresponding to the target object, in the video data; and transmitting, to the second terminal through the first data channel or the second data channel, the video data added with the target label.
alternatively, to execute the following steps: performing a video call with a first terminal through a first data channel; in response to an external input, adding a target label for a target object to a video frame which is shared by the first terminal; in a subsequent process of the video call with the first terminal, obtaining target video data, which is added with the target label, of the first terminal, wherein the target label is added to a position, corresponding to the target object, in the target video data; and displaying the target video data.
alternatively, to execute the following steps: receiving labeled data which is sent by a second terminal through a second data channel in a process of a video call with a first terminal through a first data channel, wherein the labeled data is used for indicating a target label added to a target object in a video frame shared by the first terminal; receiving first video data which is transmitted by the first terminal through the first data channel to the second terminal; determining the target object in the first video data, and obtaining second video data by adding the target label to a position, corresponding to the target object, in the first video data; and transmitting the second video data to the second terminal through the second data channel.

For specific execution steps, refer to the various steps of the video data transmission method embodiments mentioned above, which can achieve the same technical effect, details of which are omitted here for brevity.

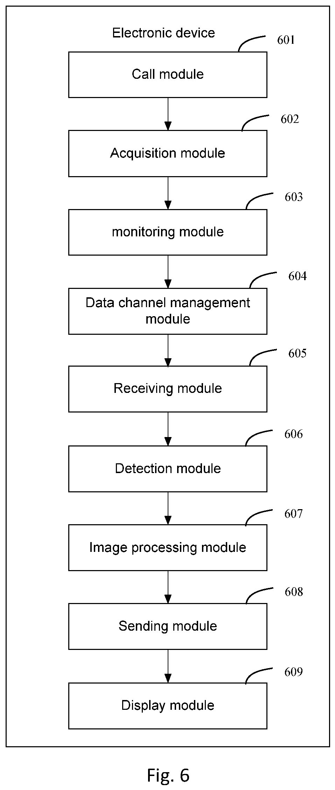

In an embodiment, FIG. 6 is an optional terminal according to an embodiment of the present disclosure. The terminal includes a call module 601, an acquisition module 602, a monitoring module 603, a data channel management module 604, a receiving module 605, a detection module 606, an image processing module 607, a sending module 608, and a display module 609. The terminal can serve as either the first terminal or the second terminal in the above embodiments.

The first terminal is taken as an example. The call module 601 is configured to establish, maintain, and hang up a call.

The acquisition module 602 is configured to acquire audio and video data, which can be configured to acquire audio data of a microphone and video data of a camera.

The monitoring module 603 is configured to monitor whether the terminal needs to establish a second data channel (e.g. an IMS data channel), including monitoring an SIP signaling sent by the counterpart end (e.g. a second terminal), analyzing a dcmap field in a Session Description Protocol (SDP) offer message, and determining whether a data channel needs to be established. According to a 3rd Generation Partnership Project (3GPP) TypeScript (TS) 26.114 specification, the dcmap field represents that a data channel needs to be established. The data channel may be a Bootstrap data channel with a Stream ID less than 1000, which is used by the terminal to obtain a Hyper text Markup Language (HTML) webpage from a network side, i.e. a data channel application defined in the 3GPP TS26.114 specification. The application generally includes HTML, JavaScript script, Cascading Style Sheets (CSS), and the like. The data channel may be a non-Bootstrap data channel, which is used for transmitting data information required by a data channel application.

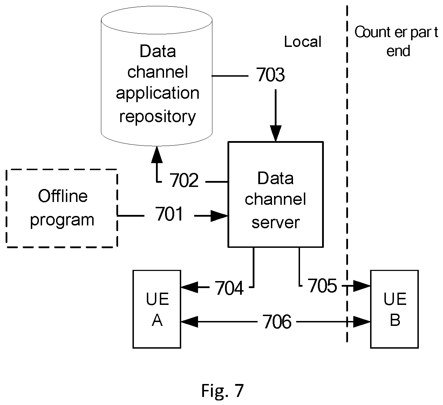

The data channel management module 604 is configured to establish, maintain, and release the IMS data channel. For example, the second terminal sends an SIP update signaling carrying the dcmap field to the network side, and then establishes the second data channel to the counterpart end. Referring to the schematic diagram of establishing a second data channel shown in FIG. 7, according to the 3GPP TS 26.114 specification, the terminal can establish the second data channel to a data server on the network side, such as channel 704 and channel 705, or directly establish the second data channel to the counterpart end, such as channel 706. 701 in FIG. 7 is a channel between an offline program and a server; 702 is a channel between the server and an application repository; and 703 is a channel between the application repository and the server.

The receiving module 605 is configured to receive a target label and related information which are sent by the counterpart end through the second data channel. The counterpart end can send a full image added with the target label, or only send the target label and a labeled region.

The detection module 606 is configured to detect whether the acquired video data contains the labeled region. For example, inertial sensor data can be read to obtain a current motion state and motion speed of the terminal, and image-based plane detection is performed in the acquired video data according to the target label and relevant information which are obtained by the receiving module 605, thereby determining whether the acquired video data contains the labeled region.

The image processing module 607 is configured to add the target label to video data.

The sending module 608 is configured to send the video data added with the target label to the counterpart end.

The display module 609 is configured to locally display the video data added with the target label.

The following takes a second data channel being an IMS data channel and a target label being an AR label as an example. In conjunction with the terminal structure shown in FIG. 6, the video data transmission method provided in this embodiment of the present disclosure will be explained.

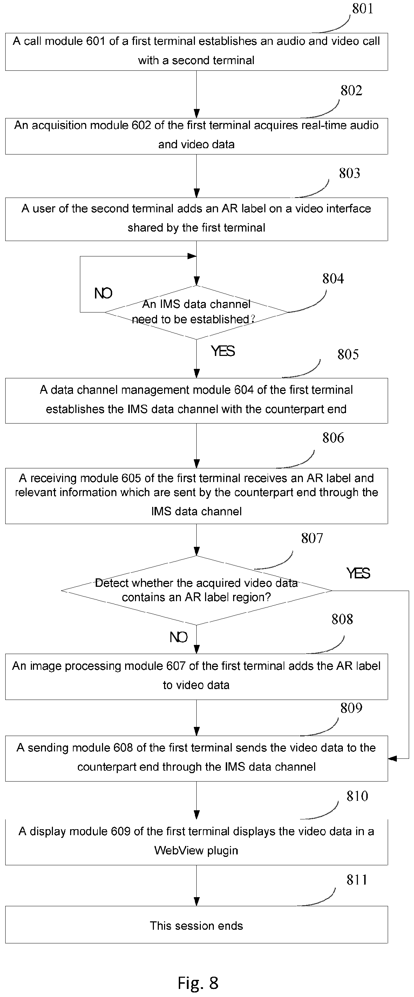

FIG. 8 is a flowchart of one interaction between a first terminal and a second terminal in an embodiment of the present disclosure. As shown in FIG. 8, the following steps are mainly included:
At step 801: The call module 601 of the first terminal establishes an audio and video call with the second terminal.

At step 802: The acquisition module 602 of the first terminal acquires real-time audio and video data.

At step 803: A user of the second terminal adds an AR label on a video interface shared by the first terminal.

In this embodiment, the second terminal needs to send the AR label and relevant information to the first terminal through the IMS data channel. Therefore, the second terminal sends a request for establishing the IMS data channel to the first terminal.

At step 804: The monitoring module 603 of the first terminal monitors whether the IMS data channel needs to be established. When it is detected that the IMS data channel needs to be established, step 805 is continued to be executed. If no, current step 804 is executed.

If the monitoring module 603 monitors, from the second terminal, the request for establishing the IMS data channel, it determines that the IMS data channel needs to be established.

At step 805: The data channel management module 604 of the first terminal establishes the IMS data channel to the counterpart end.

At step 806: The receiving module 605 of the first terminal receives the AR label and the relevant information which are sent by the counterpart end through the IMS data channel.

The relevant information can include a position of the AR label, a target object, or other information.

At step 807: The detection module 606 of the first terminal detects whether the acquired video data contains an AR label region. If yes, step 808 is continued to be executed. If no, step 809 is executed.

At step 808: The image processing module 607 of the first terminal adds the AR label to video data.

At step 809: The sending module 608 of the first terminal sends the video data to the counterpart end through the IMS data channel.

In a case of executing step 808 and then executing step 809, the AR label is added to the video data.

At step 810: The display module 609 of the first terminal displays the video data in a WebView plugin.

At step 811: This session ends.

Through the above method, the second terminal can send the AR label and the relevant information to the first terminal through the IMS data channel. Then, in a case that the acquired video data contains the AR label region, the first terminal adds the AR label to the video data and sends the video data to the second terminal, so that the video data displayed by the second terminal contains the AR label.

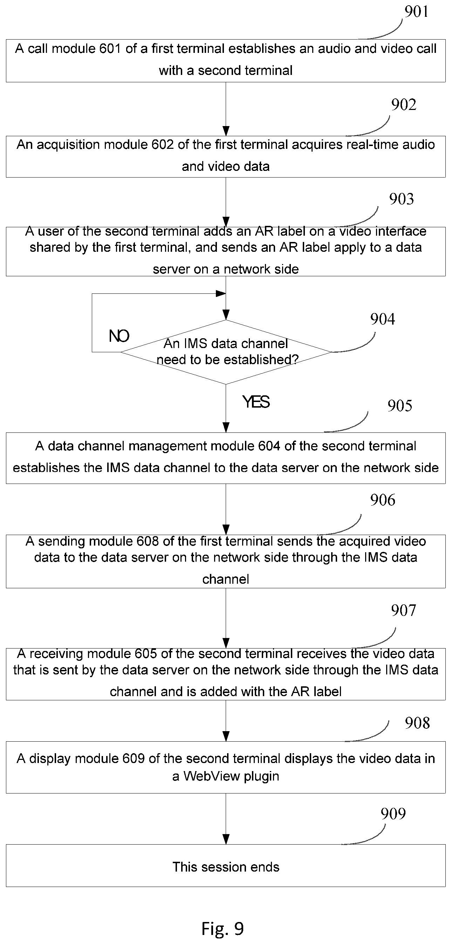

FIG. 9 is a flowchart of another interaction between a first terminal and a second terminal in an embodiment of the present disclosure. As shown in FIG. 9, the following steps are mainly included:
At step 901: The call module 601 of the first terminal establishes an audio and video call with the second terminal.

At step 902: The acquisition module 602 of the first terminal acquires real-time audio and video data.

At step 903: A user of the second terminal adds an AR label on a video interface shared by the first terminal, and sends an AR label apply to a data server on a network side.

At step 904: The monitoring module 603 of the second terminal monitors whether the IMS data channel needs to be established. If yes, step 905 is continued to be executed. If no, current step 904 is executed.

Specifically, the second terminal can determine, according to a response returned by the data server when receiving the AR label apply, whether the IMS data channel needs to be established. For example, if the data server returns a response for agreeing the AR label apply, the monitoring module 603 determines that the IMS data channel needs to be established.

At step 905: The data channel management module 604 of the second terminal establishes the IMS data channel to the data server on the network side.

At step 906: The sending module 608 of the first terminal sends the acquired video data to the data server on the network side through the IMS data channel.

At step 907: The receiving module 605 of the second terminal receives the video data that is sent by the data server on the network side through the IMS data channel and is added with the AR label.

At step 908: The display module 609 of the second terminal displays the video data in a WebView plugin.

At step 909: This session ends.

The above method is different from the method shown in FIG. 8 in the following: The data server on the network side adds the AR label in the subsequently transmitted video data, thereby achieving tracking of an AR labeled video.

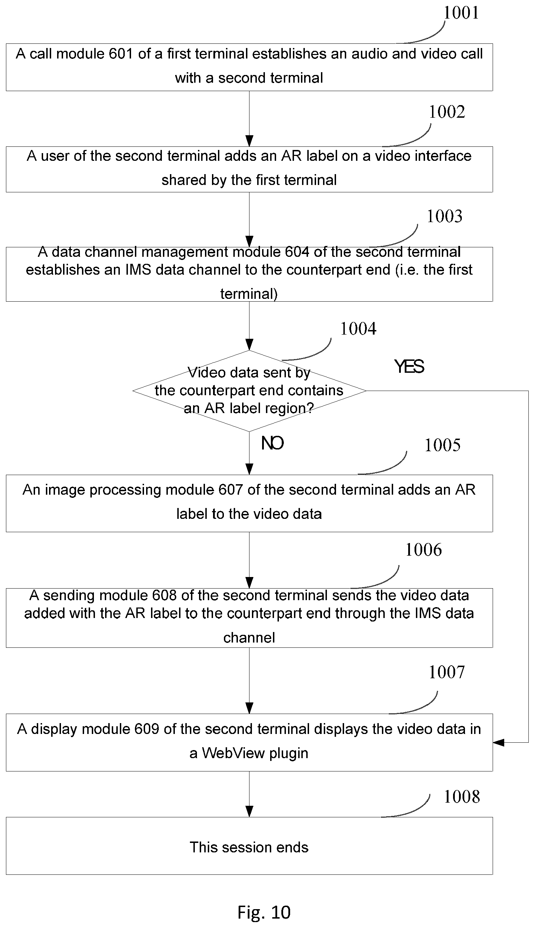

FIG. 10 is a flowchart of still another interaction between a first terminal and a second terminal in an embodiment of the present disclosure. As shown in FIG. 10, the following steps are mainly included:
At step 1001: The call module 601 of the second terminal establishes an audio and video call with the first terminal.

At step 1002: A user of the second terminal adds an AR label on a video interface shared by the first terminal.

At step 1003: The data channel management module 604 of the second terminal establishes an IMS data channel to the counterpart end (i.e. the first terminal).

At step 1004: The detection module 606 of the second terminal detects whether video data sent by the counterpart end contains an AR label region. If no, step 1005 is continued to be executed. If yes, step 1007 is executed.

At step 1005: The image processing module 607 of the second terminal adds an AR label to the video data.

At step 1006: The sending module 608 of the second terminal sends the video data added with the AR label to the counterpart end through the IMS data channel, so that the first terminal can obtain the video data added with the AR label.

At step 1007: The display module 609 of the second terminal displays the video data in a WebView plugin. If step 1006 to step 1007 are executed, the video data is added with the AR label.

At step 1008: This session ends.

The above method is different from the method shown in FIG. 9 in the following: The second terminal adds the AR label in the subsequently transmitted video data and displays the video data, so that in a case that the first terminal does not support a function of adding the AR label in the video data, tracking of an AR labeled video is achieved.

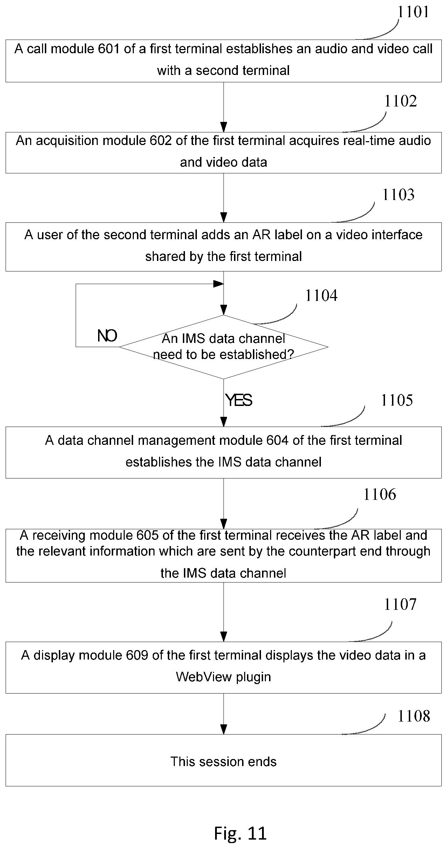

FIG. 11 is a flowchart of yet another interaction between a first terminal and a second terminal in an embodiment of the present disclosure. As shown in FIG. 10, the following steps are mainly included:
At step 1101: The call module 601 of the first terminal establishes an audio and video call with the second terminal.

At step 1102: The acquisition module 602 of the first terminal acquires real-time audio and video data.

At step 1103: A user of the second terminal adds an AR label on a video interface shared by the first terminal.

At step 1104: The monitoring module 603 of the first terminal monitors whether the IMS data channel needs to be established. If yes, step 1105 is continued to be executed. If no, current step 1104 is executed.

At step 1105: The data channel management module 604 of the first terminal establishes the IMS data channel.

At step 1106: The receiving module 605 of the first terminal receives the AR label and the relevant information which are sent by the counterpart end through the IMS data channel.

At step 1107: The display module 609 of the first terminal displays the video data in a WebView plugin.

In a case that the audio and video call between the first terminal and the second terminal is not hung up, in the above flow, the first terminal continuously shares video frames with the second terminal, and the second terminal can continuously share video frames with the first terminal too.

At step 1108: This session ends.

In the above method, in a case that the first terminal does not support the function of adding the AR label in the video data, according to the AR label and the relevant information which are sent through the IMS data channel, the first terminal may not execute the step of adding the AR label in the video data, and the second terminal may add the AR label according to the method shown in FIG. 10 after receiving the video data sent by the first terminal, and then sends the video data added with the AR label to the first terminal through the IMS data channel, so that the first terminal can obtain the video data added with the AR label too.

The structures of the terminal above constitute no limitation on the terminal. The terminal may include more or fewer components than those shown in the figure, or some components may be combined, or a different component deployment may be used. For example, an input unit may include a Graphics Processing Unit (GPU) and a microphone. A display unit may configure a display panel using a liquid crystal display, an organic light-emitting diode, or another form. The user input unit includes at least one of a touch panel and another input device. The touch panel is also referred to as a touchscreen. The another input device may include, but not limited to, a physical keyboard, a function key (such as a volume control key or a switch key), a track ball, a mouse, and a joystick, which is not described herein again.

The memory may be configured to store a software program and various data. The memory may mainly include a first storage area for storing a program or instructions, and a second storage area for storing data. The first storage area may store an operating system, an application program or instructions required by at least one function (for example, a sound playing function and an image display function), and the like. The memory may be a volatile memory or a non-volatile memory, or the memory may include both a volatile memory and a non-volatile memory. The non-volatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM), or a flash memory. The volatile memory may be a random access memory (Random Access Memory, RAM), a static RAM (Static RAM, SRAM), a dynamic RAM (Dynamic RAM, DRAM), a synchronous DRAM (Synchronous DRAM, SDRAM), a double data rate SDRAM (Double Data Rate SDRAM, DDRSDRAM), an enhanced SDRAM (Enhanced SDRAM, ESDRAM), a synch link DRAM (Synch link DRAM, SLDRAM), and a direct rambus RAM (Direct Rambus RAM, DRRAM).

The processor may include one or more processing units. Optionally, the processor integrates an application processor and a modem processor, wherein the application processor mainly processes operations involving an operating system, a user interface, an application program, and the like, and the modem processor mainly processes a wireless communication signal, such as a baseband processor. It can be understood that, the modem processor may not be integrated into the processor.

The embodiments of the present disclosure further provide a readable storage medium. The readable storage medium stores programs or instructions. The programs or instructions, when run by a processor, implement the various processes of the foregoing video data transmission method embodiment and can achieve the same technical effects, details of which are omitted here for brevity.

The processor is the processor in the electronic device in the above embodiment. The readable storage medium includes a computer-readable storage medium, for example, a computer read-only memory (Read-Only Memory, ROM), a random access memory (Random Access Memory, RAM), a magnetic disk, or an optical disk. The embodiments of the present disclosure further provide a chip. The chip includes a processor and a communications interface. The communications interface is coupled to the processor. The processor is configured to run programs or instructions to implement the various processes of the video data transmission method embodiment, and can achieve the same technical effects, details of which are omitted here for brevity.

It should be understood that the chip mentioned in the embodiments of the present disclosure can alternatively be referred to as a system chip, a chip system, or a system-on-chip.

It should be noted that the terms "include", "comprise", or any other variations thereof herein are intended to cover a non-exclusive inclusion, so that a processor, method, object, or apparatus including a series of elements not only includes those elements, but also includes other elements not specifically listed, or includes inherent elements of this process, method, object, or apparatus. Without more limitations, elements defined by the sentence "including one" does not exclude that there are still other same elements in the process, method, object, or apparatus including these elements. In addition, it should be noted that the scope of the methods and devices in the embodiments of the present disclosure is not limited to executing functions in the order shown or discussed, but may alternatively include executing functions in a substantially simultaneous manner or in an opposite order according to the functions involved. For example, the methods described may be executed in a different order than that described, and various steps may alternatively be added, omitted, or combined. In addition, features described with reference to some examples may alternatively be combined in other examples.

According to the descriptions in the foregoing implementations, a person skilled in the art may clearly learn that the method according to the foregoing embodiment may be implemented by relying on software and an essential commodity hardware platform or by using hardware, but the former is a better implementation in most cases. Based on such an understanding, the technical solutions of the present disclosure essentially, or the part contributing to the existing technology, may be presented in the form of a software product. The computer software product is stored in a storage medium (for example, a read-only memory (ROM)/random access memory (RAM), a magnetic disk, or an optical disk) including several instructions to enable a terminal (which may be a mobile phone, a computer, a server, an air conditioner, a network device, or the like) to perform the methods described in all the embodiments of the present disclosure.

The embodiments of the present disclosure have been described above with reference to the accompanying drawings. The present disclosure is not limited to the specific implementations described above, and the specific implementations described above are merely examples and not limitative. Those of ordinary skill in the art may make various forms under the teaching of the present disclosure without departing from the spirit of the present disclosure and the protection scope of the claims, and these forms shall all fall within the protection of the present disclosure.

## Claims

1. A video data transmission method, applied to a first terminal, and the method comprises:
performing a video call with a second terminal through a first data channel;
receiving labeled data which is sent by the second terminal through a second data channel, wherein the labeled data is used for indicating a target label added to a target object in a video frame shared by the first terminal;
determining, based on the labeled data, the target object labeled by the second terminal;
determining the target object in video data which is to be transmitted through the first data channel, and adding the target label to a position, corresponding to the target object, in the video data; and
transmitting, to the second terminal through the first data channel or the second data channel, the video data added with the target label.

2. The method according to claim 1, wherein before the receiving labeled data which is sent by the second terminal through a second data channel, the method further comprises:
receiving a session establishment signaling which is sent by the second terminal;
analyzing the session establishment signaling, and obtaining indication information which is carried in the session establishment signaling and indicates that the second data channel needs to be established; and
establishing the second data channel to the second terminal.

3. The method according to claim 1, wherein the labeled data comprises at least one of the following:
full image data added with the target label;
the target label and region information labeled by the target label.

4. The method according to any one of claims 1 to 3, wherein after the transmitting, to the second terminal, the video data added with the target label, the method further comprises:
locally displaying the video data added with the target label on the first terminal.

5. The method according to claim 1, wherein before the adding the target label to a position, corresponding to the target object, in the video data, the method further comprises:
determining that the first terminal supports adding the target label in the video data.

6. The method according to claim 1, wherein after the receiving labeled data which is sent by the second terminal through a second data channel, the method further comprises:
in a case of determining that the first terminal supports adding the target label in the video data, transmitting the video data to the second terminal through the first data channel.

7. A video data transmission method, applied to a second terminal, wherein the method comprises:
performing a video call with a first terminal through a first data channel;
in response to an external input, adding a target label for a target object to a video frame which is shared by the first terminal;
in a subsequent process of the video call with the first terminal, obtaining target video data, which is added with the target label, of the first terminal, wherein the target label is added to a position, corresponding to the target object, in the target video data; and
displaying the target video data.

8. The method according to claim 7, wherein the obtaining target video data, which is added with the target label, of the first terminal comprises:
sending labeled data to the first terminal through a second data channel to the first terminal, wherein the labeled data is used for indicating a target label added to a target object in a video frame shared by the first terminal; and
receiving the target video data which is transmitted by the first terminal through the first data channel or the second data channel and is added with the target label.

9. The method according to claim 8, wherein before the sending labeled data to the first terminal through a second data channel to the first terminal, the method further comprises:
sending a session establishment signaling to the first terminal, wherein the session establishment signaling carries indication information that indicates that a data channel needs to be established; and
receiving a response signaling which is sent by the first terminal, and establishing the second data channel to the first terminal.

10. The method according to claim 7, wherein the obtaining target video data, which is added with the target label, of the first terminal comprises:
receiving first video data which is transmitted by the first terminal through the first data channel; and
obtaining the target video data by adding the target label to a position, corresponding to the target object, in the first video data.

11. The method according to claim 10, wherein after the adding a target label for a target object to a video frame which is shared by the first terminal, the method further comprises:
sending labeled data to the first terminal through a second data channel to the first terminal, wherein the labeled data is used for indicating the target label added to the target object in the video frame shared by the first terminal.

12. The method according to claim 11, wherein before the obtaining the target video data by adding the target label to a position, corresponding to the target object, in the first video data, the method further comprises:
determining that the first video data does not contain the target label.

13. The method according to claim 7, wherein the obtaining target video data, which is added with the target label, of the first terminal comprises:
sending the labeled data to a data server through a second data channel to the data server, wherein the labeled data is used for indicating the target label added to the target object in the video frame shared by the first terminal; and
receiving the target video data which is transmitted by the data server through the second data channel and is added with the target label.

14. The method according to claim 13, wherein before the sending the labeled data to a data server through a second data channel to the data server, the method further comprises:
sending a session establishment signaling to the data server, wherein the session establishment signaling carries indication information that indicates that a data channel needs to be established; and
receiving a response signaling which is sent by the data server, and establishing the second data channel to the data server.

15. A video data transmission method, applied to a data server, wherein the method comprises:
receiving labeled data which is sent by a second terminal through a second data channel in a process of a video call with a first terminal through a first data channel, wherein the labeled data is used for indicating a target label added to a target object in a video frame shared by the first terminal;
receiving first video data which is transmitted by the first terminal through the first data channel to the second terminal;
determining the target object in the first video data, and obtaining second video data by adding the target label to a position, corresponding to the target object, in the first video data; and
transmitting the second video data to the second terminal through the second data channel.

16. The method according to claim 15, wherein before the receiving labeled data which is sent by the second terminal through a second data channel, the method further comprises:
receiving a session establishment signaling which is sent by the second terminal;
analyzing the session establishment signaling, and obtaining indication information which is carried in the session establishment signaling and indicates that a data channel needs to be established; and
establishing the second data channel to the second terminal.

17. A video data transmission system, comprising:
a first terminal, configured to perform the method as claimed in any one of claims 1 to 6; and
a second terminal, configured to perform the method as claimed in any one of claims 7 to 14.

18. The system according to claim 17, further comprising:
a data server, configured to perform the method as claimed in any one of claims 15 to 16.

19. An electronic device, comprising a processor and a memory, wherein the memory stores a program or instructions executable on the processor, and the programs or instructions are configured to, when executed by the processor, implement the steps of the video data transmission method as claimed in any one of claims 1 to 16.

20. A readable storage medium, having a program or instructions stored thereon, wherein the program or instructions are configured to, when executed by a processor, implement the steps of the video data transmission method as claimed in any one of claims 1 to 16.
